(19) Europäisches Patentamt
European Patent Office
Office européen des brevets

(11) **EP 4 660 583 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
*G01C 21/16* (2006.01)       *G01C 21/34* (2006.01)
*G01S 17/86* (2020.01)       *G01S 19/45* (2010.01)

(21) Application number: **24822721.7**

(22) Date of filing: **12.06.2024**

(86) International application number:
**PCT/CN2024/098780**

(87) International publication number:
**WO 2024/255772 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023   CN 202310699223**

(71) Applicants:
• **Chery Automobile Co., Ltd.**
  **Wuhu, Anhui 241006 (CN)**
• **Wuhu Lion Automotive Technologies Co., Ltd.**
  **Wuhu, Anhui 241006 (CN)**

(72) Inventors:
• **XU, Qiannan**
  **Wuhu, Anhui 241006 (CN)**
• **WANG, Wei**
  **Wuhu, Anhui 241006 (CN)**
• **WANG, Xiao**
  **Wuhu, Anhui 241006 (CN)**
• **CHEN, Manqiu**
  **Wuhu, Anhui 241006 (CN)**
• **TANG, Haifeng**
  **Wuhu, Anhui 241006 (CN)**

(74) Representative: **Yang, Shu**
  **Withers & Rogers LLP**
  **2 London Bridge**
  **London SE1 9RA (GB)**

(54) **UNMANNED POSITIONING METHOD AND APPARATUS FOR VEHICLE, VEHICLE, AND STORAGE MEDIUM**

(57) An unmanned positioning method and apparatus for a vehicle, the vehicle, and a storage medium. The unmanned positioning method for a vehicle comprises: obtaining a GDOP value of a current positioning policy of a vehicle (S101); calculating a current confidence of the current positioning policy according to the GDOP value (S102); and when the current confidence is less than a trusted confidence, determining that the current positioning policy is invalid, and replacing the current positioning policy with an alternative positioning policy, so as to obtain a current location of the vehicle by performing fusing according to Global Navigation Satellite System (GNSS) data, laser radar data, and inertial measurement data of the vehicle on the basis of the alternative positioning policy (S 103). The accuracy of vehicle positioning when a GNSS signal is weak is effectively improved, so that the safety of the vehicle is improved, and in addition, the user driving experience is met.

EP 4 660 583 A1

Acquiring a GDOP value of a current positioning strategy of a vehicle, wherein the GDOP value indicates a positioning accuracy of GNSS data of the vehicle, and the current positioning strategy is a GNSS positioning strategy — S101

Calculating a current confidence of the current positioning strategy based on the GDOP value — S102

In a case where the current confidence is less than a trusted confidence, determining that the current positioning strategy fails, replacing the current positioning strategy with an alternative positioning strategy, and determining a current position of the vehicle based on the alternative positioning strategy, wherein the alternative positioning strategy is a positioning strategy that determines the current position of the vehicle based on a fusion of the GNSS data, LiDAR data, and inertial measurement data of the vehicle — S103

FIG. 1

## Description

The present disclosure claims priority to Chinese Patent Application No. 202310699223.0, filed on June 12, 2023 and entitled "METHOD AND APPARATUS FOR UNMANNED VEHICLE POSITIONING, VEHICLE, AND STORAGE MEDIUM", the content of which is incorporated herein by reference in its entirety.

## TECHNICAL FIELD

The present disclosure relates to the field of unmanned driving, and in particular, to a method and apparatus for unmanned vehicle positioning, a vehicle, and a storage medium.

## BACKGROUND

In the related art, vehicles can employ a multi-sensor fusion positioning technique combining a global navigation satellite system (GNSS) with an inertial measurement unit (IMU) to achieve real-time positioning in complex environments by sensing the surrounding environments.

However, when GNSS signals are weak, the positioning technique combining the GNSS with the IMU is prone to causing positioning errors or sudden jumps, resulting in low positioning accuracy, which diminishes vehicle safety and the user's driving experience. In this way, driver's and passenger's requirements fail to met.

## SUMMARY

Embodiments of the present disclosure provide a method and apparatus for unmanned vehicle positioning, a vehicle, and a storage medium, which can solve the problem of low positioning accuracy when the GNSS signal is weak in the related art, which employs a technique combining GNSS with IMU.

In a first aspect, embodiments of the present disclosure provide method for unmanned vehicle positioning. The method includes: acquiring a geometric dilution of precision (GDOP) value of a current positioning strategy of a vehicle, wherein the GDOP value indicates a positioning accuracy of global navigation satellite system (GNSS) data of the vehicle, and the current positioning strategy is a GNSS positioning strategy; calculating a current confidence of the current positioning strategy based on the GDOP value; and in a case where the current confidence is less than a trusted confidence, determining that the current positioning strategy fails, replacing the current positioning strategy with an alternative positioning strategy, and determining a current position of the vehicle based on the alternative positioning strategy, wherein the alternative positioning strategy is a positioning strategy that determines the current position of the vehicle based on a fusion of the GNSS data, LiDAR data, and inertial measurement data of the vehicle.

Optionally, in some embodiments of the present disclosure, determining the current position of the vehicle based on the fusion of the GNSS data, the LiDAR data, and the inertial measurement data of the vehicle includes: determining initial pose information of the vehicle in a map coordinate system based on the GNSS data and the inertial measurement data; generating a point cloud scene map based on the initial pose information and the LiDAR data; and determining the current position of the vehicle based on a matching result between point cloud data in the LiDAR data and the point cloud scene map.

Optionally, in some embodiments of the present disclosure, determining the initial pose information of the vehicle in the map coordinate system based on the GNSS data and the inertial measurement data includes: determining global positioning information in the reference coordinate system based on the GNSS data and the inertial measurement data via extended Kalman filtering; and determining the initial pose information of the vehicle in the map coordinate system based on a conversion relationship between the reference coordinate system and the map coordinate system and the global positioning information.

Optionally, in some embodiments of the present disclosure, generating the point cloud scene map based on the initial pose information and the LiDAR data includes: constructing a point cloud map based on at least one keyframe corresponding to the initial pose information in the LiDAR data; extracting keyframe data from the LiDAR data; acquiring keyframe pose information by extracting at least one point-plane feature from the keyframe data and performing pose matching on each of the point-plane feature; and generating the point cloud scene map by inserting the point cloud data in the LiDAR data into the point cloud map based on the keyframe pose information.

Optionally, in some embodiments of the present disclosure, prior to replacing the current positioning strategy with the alternative positioning strategy, the method further includes: acquiring Euclidean distance residuals between points in the point cloud data and corresponding points in the point cloud scene map; calculating confidence of the alternative positioning strategy based on the Euclidean distance residuals; and in a case where the confidence of the alternative positioning strategy is greater than or equal to the current confidence, replacing the current positioning strategy with the alternative positioning strategy.

Optionally, in some embodiments of the present disclosure, upon calculating the confidence of the alternative positioning strategy based on the Euclidean distance residuals, the method further includes: in a case where the confidence of the alternative positioning strategy is less than the current confidence, continuing to perform positioning based on the current positioning strategy, and issuing a low-confidence alert.

Optionally, in some embodiments of the present disclosure, upon calculating the confidence of the alternative positioning strategy based on the Euclidean distance residuals, the method further includes: in a case where the confidence of the alternative positioning strategy is less than the current confidence, determining whether the current confidence is less than an untrusted confidence; and in a case where the current confidence is less than the untrusted confidence, issuing a positioning failure alert.

In a second aspect, embodiments of the present disclosure provide an apparatus for unmanned vehicle positioning. The apparatus includes: an acquiring module, configured to acquire a geometric dilution of precision (GDOP) value of a current positioning strategy of a vehicle, wherein the GDOP value indicates a positioning accuracy of global navigation satellite system (GNSS) data of the vehicle, and the current positioning strategy is a GNSS positioning strategy; a calculating module, configured to calculate a current confidence of the current positioning strategy based on the GDOP value; and a processing module, configured to determine that the current positioning strategy fails, replace the current positioning strategy with an alternative positioning strategy, and determine a current position of the vehicle based on the alternative positioning strategy, in a case where the current confidence is less than a trusted confidence, wherein the alternative positioning strategy is a positioning strategy that determines the current position of the vehicle based on a fusion of the GNSS data, LiDAR data, and inertial measurement data of the vehicle.

Optionally, in some embodiments of the present disclosure, the processing module is configured to: determine initial pose information of the vehicle in a map coordinate system based on the GNSS data and the inertial measurement data; generate a point cloud scene map based on the initial pose information and the LiDAR data; and determine the current position of the vehicle based on a matching result between point cloud data in the LiDAR data and the point cloud scene map.

Optionally, in some embodiments of the present disclosure, the processing module is configured to: determine global positioning information in the reference coordinate system based on the GNSS data and the inertial measurement data via extended Kalman filtering; and determine the initial pose information of the vehicle in the map coordinate system based on a conversion relationship between the reference coordinate system and the map coordinate system and the global positioning information.

Optionally, in some embodiments of the present disclosure, the processing module is configured to: construct a point cloud map based on at least one keyframe corresponding to the initial pose information in the LiDAR data; extract keyframe data from the LiDAR data; acquire keyframe pose information by extracting at least one point-plane feature from the keyframe data and performing pose matching on each of the point-plane feature; and generate the point cloud scene map by inserting the point cloud data in the LiDAR data into the point cloud map based on the keyframe pose information.

Optionally, in some embodiments of the present disclosure, the acquiring module is further configured to: prior to replacing the current positioning strategy with the alternative positioning strategy, acquire Euclidean distance residuals between points in the point cloud data and corresponding points in the point cloud scene map; calculate confidence of the alternative positioning strategy based on the Euclidean distance residuals; and in a case where the confidence of the alternative positioning strategy is greater than or equal to the current confidence, perform replacing the current positioning strategy with the alternative positioning strategy.

Optionally, in some embodiments of the present disclosure, the apparatus further includes a controlling module, configured to: in a case where the confidence of the alternative positioning strategy is less than the current confidence, continue to perform positioning based on the current positioning strategy, and issue a low-confidence alert.

Optionally, in some embodiments of the present disclosure, the apparatus further includes a determining module, configured to: in a case where the confidence of the alternative positioning strategy is less than the current confidence, determine whether the current confidence is less than an untrusted confidence; and in a case where the current confidence is less than the untrusted confidence, issue a positioning failure alert.

In a third aspect, embodiments of the present disclosure provide a vehicle. The vehicle includes: a memory, a processor, and one or more executable computer programs of the processor stored in the memory, wherein the processor, when loading and executing the one or more executable computer programs, is caused to perform the method for unmanned vehicle positioning as described above.

In a fourth aspect, embodiments of the present disclosure provide a computer-readable storage medium. The computer-readable storage medium stores one or more computer programs, wherein a processor, when loading and executing the one or more computer programs, is caused to perform the method for unmanned vehicle positioning as described above.

In a fifth aspect, embodiments of the present disclosure provide a computer program product. The computer program product, when loaded and executed in a vehicle, causes the vehicle to perform the method for unmanned vehicle positioning as described above.

The present disclosure acquires the GDOP value of the current positioning strategy of the vehicle to calculate the current confidence of that strategy. In the case that the current confidence is less than the trusted confidence, the current positioning strategy is replaced with the alternative positioning strategy, such that the current position of the vehicle is determined based on a fusion of the GNSS data, LiDAR data, and inertial measurement data of the vehicle. The method effectively enhances positioning accuracy when the GNSS signal is weak, thereby improving vehicle safety and meeting the driver's and passenger's requirements.

Additional aspects and advantages of the embodiments of the present disclosure are to be partially provided in the following description, partially become apparent from the following description, or be understood through the practice of the embodiments of the present disclosure.

**BRIEF DESCRIPTION OF THE DRAWINGS**

The above and/or additional aspects and advantages of the present disclosure are to become apparent and readily understood from the following description of embodiments in conjunction with the accompanying drawings, wherein:

FIG. 1 is a flowchart of a method for unmanned vehicle positioning according to some embodiments of the present disclosure;
FIG. 2 is a schematic structural diagram of feature matching of edge points according to some embodiments of the present disclosure; and
FIG. 3 is a schematic structural diagram of feature matching of planar points according to some embodiments of the present disclosure;
FIG. 4 is a schematic diagram of the principle of conversion between two positioning manners based on calculated confidence according to some embodiments of the present disclosure;
FIG. 5 is a structural schematic diagram of an apparatus for unmanned vehicle positioning according to some embodiments of the present disclosure; and
FIG. 6 is a structural schematic diagram of a vehicle according to some embodiments of the present disclosure.

**DETAILED DESCRIPTION**

The following describes in detail the embodiments of the present disclosure, examples of which are illustrated in the accompanying drawings, wherein reference numerals identical or similar throughout denote identical or similar elements or elements having identical or similar functions. The embodiments described below with reference to the drawings are exemplary and are intended to explain the present disclosure, and should not be understood as limiting the scope of the present disclosure.

Prior to explaining the embodiments of the present disclosure, an introduction to the application environments of the embodiments is provided.

One essential requirement for an unmanned vehicle traveling on a road is knowing the current pose and the target pose of the vehicle. Therefore, sensors are required to perceive the surrounding environment, which achieves real-time positioning of the current pose within the environment. The positioning sensors typically include GNSS, LiDAR, and IMU. A single sensor has limitations in determining the current position of the vehicle. Multi-sensor information fusion positioning techniques solve the problem that insufficient information, poor timeliness, and low robustness inherent of the single sensor positioning techniques, which effectively enhances the accuracy and feasibility of positioning perception in complex environments. Therefore, the multi-sensor information fusion positioning techniques represents a promising research art of the current unmanned driving art.

Currently, the multi-sensor fusion positioning techniques typically combine GNSS with IMU. IMUs compensate for low update frequency of GNSS, and GNSS corrects motion errors of IMU. However, in underground tunnels or other regions with poor GNSS signal, GNSS may fail to correct motion errors of IMU timely. In this way, the determined current position may already exhibit deviations or jumps, and failure to detect this situation timely can easily lead to vehicle accidents.

Based on this, the present disclosure provides a method for unmanned vehicle positioning. In this method, the GDOP value of the current positioning strategy of the vehicle is acquired to calculate the current confidence of the current positioning strategy. In the case that the current confidence is less than the trusted confidence, the current positioning strategy is replaced with the alternative positioning strategy, such that the current position of the vehicle is determined based on a fusion of the GNSS data, LiDAR data, and inertial measurement data of the vehicle. The method effectively enhances positioning accuracy when the GNSS signal is weak, thereby improving vehicle safety and meeting the driver's and passenger's requirements.

The method and apparatus for unmanned vehicle positioning according to the embodiments of the present disclosure are described in the following with reference to the accompanying drawings.

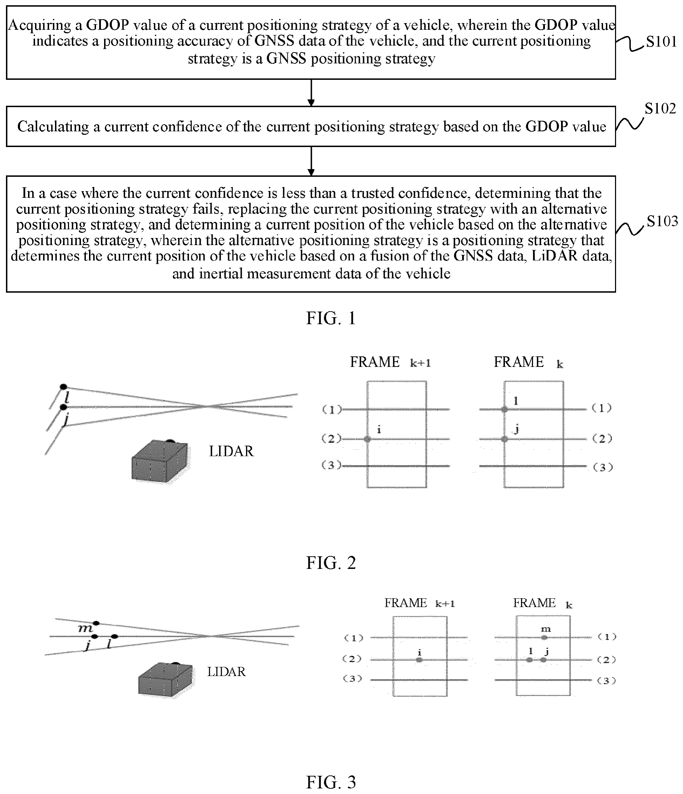

FIG. 1 is a flowchart of the method for unmanned vehicle positioning according to some embodiments of the present disclosure. As shown in FIG. 1, the method for unmanned vehicle positioning includes the following processes.

In S101, the GDOP value of the current position of the current positioning strategy is acquired. The GDOP value indicates the positioning accuracy of the GNSS data of the vehicle, and the current positioning strategy is a GNSS positioning strategy.

It should be understood that the present disclosure acquires the geometric dilution of precision (GDOP) value of the current positioning strategy. For example, the GDOP value corresponding to the GNSS data is calculated based on position dilution of precision (PDOP) and time dilution of precision (TDOP) data. The calculated value is determined as the GDOP value of the current positioning strategy, thereby effectively enhancing the performability of the unmanned positioning according to the embodiments of the present disclosure.

PDOP relates not only to the quality of observations but also to the geometric configuration between the measured satellites and the receiver, thus also called an indicator of precision strength. For example, PDOP is calculated from horizontal dilution of precision (HDOP) and vertical dilution of precision (VDOP).

In some embodiments, the GDOP calculation method is expressed by the following formula:

$$HDOP^2 + VDOP^2 = PDOP^2$$

$$PDOP^2 + TDOP^2 = GDOP^2$$,

wherein HDOP indicates the horizontal component precision, VDOP indicates the vertical component precision, PDOP indicates the three-dimensional position precision, and TDOP indicates the clock offset precision.

It should be noted that GDOP represents the distance vector amplification between the receiver and space satellites caused by GNSS ranging errors. The volume of the shape outlined by the unit vector from the receiver to the space satellites participating in the positioning solution is inversely proportional to GDOP. Therefore, GDOP is also referred to geometric precision.

In S102, the current confidence of the current positioning strategy is calculated based on the GDOP value.

It is understood that the embodiments of the present disclosure can calculate the current confidence of the current positioning strategy based on the GDOP value. For example, the current confidence is calculated based on the GDOP value to evaluate the accuracy of the output pose in east-north-up (ENU) coordinate system under the current positioning strategy.

The larger GDOP value indicates poorer positioning accuracy of the GNSS data, while the smaller GDOP value indicates higher positioning accuracy of the GNSS data. Therefore, the GDOP value determined in S101 exhibits a negative correlation with the current confidence of the current positioning strategy. In other words, the higher GDOP value indicates lower current confidence in the positioning strategy, while the lower GDOP value indicates higher current confidence.

For example, the acquired GDOP value is normalized and then aligned with the confidence measurement manner. For example, in the case that the GDOP value is 0, the current confidence is 1, and so on. The current confidence of the current positioning strategy serves as the criterion for evaluating the currently adopted GNSS positioning strategy, thereby effectively enhancing the accuracy of unmanned driving positioning.

In S103, in the case that the current confidence is less than the trusted confidence, the current positioning strategy is determined to be failed, and the current positioning strategy is replaced with the alternative positioning strategy to determine the current position of the vehicle. The alternative positioning strategy is a positioning strategy that determines the current position of the vehicle based on the fusion of the GNSS data, the LiDAR data, and the inertial measurement data of the vehicle.

The trusted confidence is a preset confidence value.

It should be understood that in the present disclosure, in the case that the current confidence is less than the trusted confidence, the current positioning strategy is determined to be failed and the current positioning strategy is replaced with the alternative positioning strategy to determine the current position of the vehicle based on the alternative positioning strategy. Upon employing the alternative positioning strategy, the vehicle determines its current position based on the fusion of the GNSS data, the LiDAR data, and the inertial measurement data of the vehicle as described in the subsequent processes, which effectively enhances the accuracy of unmanned positioning when GNSS signals are weak and improves the quality of maps constructed in unmanned driving scenarios.

Optionally, in some embodiments, the method for determining the current position of the vehicle based on the fusion of GNSS data, LiDAR data, and inertial measurement data of the vehicle is implemented as follows. The initial pose information of the vehicle in the map coordinate system is determined based on GNSS data and inertial measurement data, a point cloud scene map is generated based on the initial pose information and LiDAR data, and the current position of the vehicle is determined based on the matching result between the point cloud data in the LiDAR data and the point cloud scene map.

In the embodiments of the present disclosure, the initial pose information of a vehicle is first determined based on GNSS data and inertial measurement data, and then the initial pose information is corrected based on the LiDAR data collected by the vehicle to acquire the current position of the vehicle, thereby improving the accuracy of vehicle positioning when GNSS signals are weak.

The method for determining the initial pose information of the vehicle in the map coordinate system based on GNSS and IMU data is implemented as follows. The global positioning information in the reference coordinate system is determined based on the GNSS data and the inertial measurement data via extended Kalman filtering. The initial pose information of the vehicle in the map coordinate system is determined based on a conversion relationship between the reference coordinate system and the map coordinate system and the global positioning information. That is, the global positioning information is converted into the map coordinate system to acquire the initial pose information of the vehicle.

In one possible implementation, the GNSS and IMU in the embodiments of present disclosure are fused through the extended Kalman filtering to output global positioning information in the ENU coordinate system.

That is, the reference coordinate system is the ENU system, then the global positioning information is converted into the map coordinate system to be the initial pose information for positioning via LiDAR data, thereby effectively enhancing the robustness of vehicle positioning.

For example, the embodiments of present disclosure complete the positioning initialization of the unmanned vehicle in the map coordinate system based on the latitude and longitude information measured by GNSS and the pose angle information measured by IMU in the ENU coordinate system. The conversion relationship between the ENU coordinate system and the map coordinate system is acquired based on open-source tools, which are not elaborated upon here.

Alternatively, the initial pose information of the vehicle in the map coordinate system is determined based on GNSS data and inertial measurement data through other means, such as robust tracking filter algorithms, which are not elaborated herein.

Furthermore, the method for generating the point cloud scene map based on the initial pose information and LiDAR data is implemented as follows. The point cloud map is constructed based on at least one keyframe in the LiDAR data corresponding to the initial pose information. The keyframe data is extracted from the LiDAR data. The keyframe pose information is acquired by extracting at least one point-plane feature from the keyframe data and performing pose matching on each of the point-plane feature. The point cloud scene map is generated by inserting the point cloud data in the LiDAR data into the point cloud map based on the keyframe pose information.

In the embodiments of the present disclosure, in the case that the vehicle is in the initial pose information state, the point cloud data scanned by the LiDAR of the vehicle is determined as at least one keyframe corresponding to the initial pose information in the LiDAR data. In other words, the point cloud map is constructed based on the keyframe acquired from the initial pose information.

The keyframe data is then extracted from the LiDAR data. For example, the keyframes are extracted based on preset translation thresholds and rotation thresholds for LiDAR scan data, such as a translation threshold of 1m displacement and a rotation threshold of 10 degrees in attitude angle.

Upon acquiring the keyframe data, the point-plane features are extracted from the keyframe data. Each of the point-plane features is pose matched, and based on the calculated poses, the keyframe point cloud data is inserted into the point cloud map to generate the point cloud scene map, which effectively reduces computational load and computational requirements.

The embodiments of present disclosures can extract features from point cloud data and perform feature matching to compute pose conversion relationships. The extracted features include point features and surface features, collectively referred to as point-plane features.

For example, upon receiving new LiDAR scan data, edge points and planar points are calculated by averaging the distances of ten points before and after each point along every scan line in the LiDAR data, thereby acquiring point features and surface features. Edge points are located on sharp edges in three-dimensional space, and the edge points have significant size differences with adjacent points, high curvature, and high smoothness. Plane points reside on smooth surfaces within three-dimensional space, and the plane points have minimal size differences with adjacent points, low curvature, and low smoothness.

For example, the point feature matching is solved by minimizing the distance from edge points to edge lines, and the plane feature matching is solved by optimizing the distance from plane points to planes formed by adjacent plane points. For example, as shown in FIG. 2, FIG. 2 illustrates the matching process for point features corresponding to edge points, lines (1), (2), and (3) represent scanning lines from a multi-line LiDAR. In frame k+1, edge point i lies on scanning line (2). In frame k, edge point j on line (2) is closer to edge point i. Finding the nearest edge point l on the adjacent line (1) forms an edge line by points l and j. Therefore, for edge feature points, the optimization purpose is to minimize the distance from i to the edge line lj. The final optimized feature of edge point i is extracted as the point feature.

The distance from edge point i to the edge line formed by edge points 1 and j is calculated as follows:

$$d = \frac{\left|(X2-X1)\times(X1-X0)\right|}{\left|X2-X1\right|},$$

wherein, d indicates the calculated distance value, and X2, X1, and X0 indicate the coordinates of the three edge points respectively.

For example, as shown in FIG. 3, FIG. 3 illustrates the matching process for surface features corresponding to plane points, wherein lines (1), (2), and (3) represent scanning lines from a multi-line laser scanner. In frame k+1, plane point i lies on scanning line (2). In frame k, the plane point j on line (2) is closer to point i. A nearby plane point l is located on the same line, and the closest plane point m is found on the adjacent line (1). Points 1, m, and j form a plane. Therefore, for plane feature points, the optimization purpose is to minimize the distance from plane point i to plane mlj. The final optimized feature of plane point i is extracted as the plane feature.

The distance calculation from plane point i to the plane formed by points m, l, and j is as follows:

$$d = \frac{\left|\left((X2-X1)\times(X3-X1)\right)*(X0-X1)\right|}{\left|(X2-X1)\times(X3-X1)\right|},$$

wherein d indicates the calculated distance value, and X3, X2, X1, X0 indicate the coordinate values of the four plane points.

In some embodiments, due to cumulative errors in the front-end laser odometer, repeated traversals of the same area by the unmanned vehicle causes discrepancies between newly constructed maps and previously constructed maps, leading to ghosting issues. Therefore, the loop closure detection can be performed. In the embodiments of present disclosure, GNSS and IMU fusion positioning data, i.e., initial pose information, is introduced as the initial value for loop closure detection. The search range for loop closure detection is set within 10 meters of the initial value to search for the historical position closest to the current location within this range. By matching the current frame with the 10 keyframes before and after the historical position, the keyframe corresponding to the current frame with the closest pose distance and the longest time interval is identified, which effectively accelerates loop closure detection and enhances its accuracy.

It should be noted that the above embodiments illustrate the implementation method for acquiring the current position of the vehicle by fusing GNSS data, LiDAR data, and inertial measurement data. The embodiments of the present disclosure do not limit the implementation method of the alternative positioning strategy and do not provide further illustrative examples herein.

Optionally, in the embodiments of the present disclosure, prior to replacing the current positioning strategy with the alternative positioning strategy, the Euclidean distance residual between points in the point cloud data and corresponding points in the point cloud scene map is also acquired. The confidence of the alternative positioning strategy is calculated based on the Euclidean distance residuals. In the case that the confidence of the alternative positioning strategy is greater than or equal to the current confidence, replacing the current positioning strategy with the alternative positioning strategy is performed, i.e., permit the replacement of the current positioning strategy with the alternative positioning strategy.

In the embodiments of the present disclosure, based on the established point cloud map, the global pose of the vehicle is first initialized based on GNSS and IMU data. The pose conversion matrix in the map coordinate system is calculated by matching the point cloud data of the current frame with the point cloud scene map, thereby acquiring the pose information of the current unmanned vehicle. Simultaneously, based on the acquired pose conversion matrix (rotation-translation matrix), the Euclidean distance residual sum of the current LiDAR scan data (point cloud data) and corresponding points on the point cloud map is calculated. The Euclidean distance residual sum represents the confidence of the alternative positioning strategy, which is calculated as follows:

$$score = \sum_{i} (P_i - T * Q_i)^2$$

wherein $P_i$ is the coordinate value of the point cloud in the point cloud map, T is the rotation-translation matrix, $Q_i$ is the laser scan data of the current frame, and score is the sum of Euclidean distance residuals, representing the confidence of the alternative positioning strategy. The confidence is also referred to as the LiDAR positioning confidence.

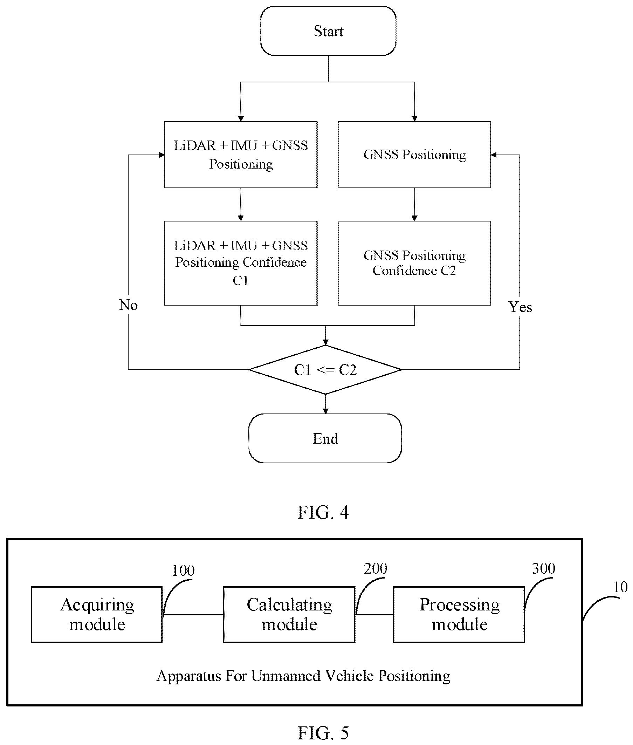

For example, as shown in FIG. 4, the confidence of the current positioning strategy (GNSS positioning strategy) is denoted as C2, and the confidence of the alternative positioning strategy (LiDAR + IMU + GNSS fusion positioning strategy) is denoted as C1. In the case that the calculated confidence C1 is greater than or equal to the current confidence C2, converting to the alternative positioning strategy is permitted, which effectively enhances positioning accuracy, thereby improving vehicle safety and reliability.

Optionally, in other embodiments, upon calculating the confidence of the alternative positioning strategy, in the case that the confidence is less than the current confidence, the current positioning strategy is employed to continue to perform positioning, and a low-confidence alert is issued.

For example, in the case that the confidence of the alternative positioning strategy is less than the current confidence, the replacement of the current positioning strategy with the alternative positioning strategy is prohibited. In addition to continuing to employ the current positioning strategy for positioning, a low-confidence alert is issued via a pop-up window on the central control screen, which effectively enhancing the interactivity of the vehicle.

Optionally, in other embodiments, upon calculating the confidence of the alternative positioning strategy, in the case that the confidence of the alternative positioning strategy is less than the current confidence, whether the current confidence is less than a preset untrusted confidence is determined. In the case that the current confidence is less than the untrusted confidence, a positioning failure alert is issued.

For example, in the embodiments of present disclosure, whether the current confidence is less than the untrusted confidence is determined. In the case that the current confidence is less than the untrusted confidence, a pop-up alert on the central control screen can indicate the inability of positioning, thereby enhancing user safety during driving.

The method for unmanned positioning vehicles according to the embodiments of the present disclosure acquires the GDOP value of the current position of the current positioning strategy to calculate its current confidence. In the case that the current confidence is less than the trusted confidence, the current positioning strategy is replaced with the alternative positioning strategy, such that the current position of the vehicle is determined based on a fusion of the GNSS data, LiDAR data, and inertial measurement data of the vehicle. The method effectively enhances positioning accuracy when the GNSS signal is weak, thereby improving vehicle safety and meeting the driver's and passenger's requirements.

Referring to the drawings, the apparatus for unmanned vehicle positioning according to the present disclosure is described as follows.

FIG. 5 is a block diagram of the apparatus for unmanned vehicle positioning according to some embodiments of the present disclosure.

As shown in FIG. 5, the apparatus for unmanned vehicle positioning 10 includes: an acquiring module 100, a calculating module 200, and a processing module 300.

The acquiring module 100 acquires the GDOP value of the current positioning strategy. The GDOP value indicates the positioning accuracy of the GNSS data of the vehicle, and the current positioning strategy is the GNSS positioning strategy.

The calculating module 200 is configured to calculate the current confidence of the current positioning strategy based on the GDOP value.

The processing module 300 determines that the current positioning strategy fails, replaces the current positioning strategy with an alternative positioning strategy, and determines a current position of the vehicle based on the alternative positioning strategy, in a case where the current confidence is less than a trusted confidence. The alternative positioning strategy is a positioning strategy that determines the current position of the vehicle based on a fusion of the GNSS data, LiDAR data, and inertial measurement data of the vehicle.

Optionally, in some embodiments of the present disclosure, the processing module 300 is configured to: determine the initial pose information of the vehicle in the map coordinate system based on the GNSS data and the inertial measurement data; generate a point cloud scene map based on the initial pose information and the LiDAR data; and determine the current position of the vehicle based on the matching result between the point cloud data in the LiDAR data and the point cloud scene map.

Optionally, in some embodiments of the present disclosure, the processing module 300 is configured to: determine global positioning information in a reference coordinate system based on the GNSS data and the inertial measurement data via extended Kalman filtering; and determine the initial pose information of the vehicle in the map coordinate system based on a conversion relationship between the reference coordinate system and the map coordinate system and the global positioning information.

Optionally, in some embodiments of the present disclosure, the processing module 300 is configured to: a point cloud map based on at least one keyframe in the LiDAR data corresponding to the initial pose information in the LiDAR data; extract keyframe data from the LiDAR data; acquire keyframe pose information by extracting at least one point-plane feature from the keyframe data and performing pose matching on each of the point-plane feature; and generate the point cloud scene map by inserting the point cloud data in the LiDAR data into the point cloud map based on the keyframe pose information.

Optionally, in some embodiments of the present disclosure, the acquiring module is further configured to: acquire Euclidean distance residuals between points in the point cloud data and corresponding points in the point cloud scene map prior to replacing the current positioning strategy with the alternative positioning strategy. The calculating module is further configured to: calculate confidence of the alternative positioning strategy based on the Euclidean distance residuals prior to replacing the current positioning strategy with the alternative positioning strategy. The replacing module is further configured to: perform replacing the current positioning strategy with the alternative positioning strategy prior to replacing the current positioning strategy with the alternative positioning strategy, in a case where the confidence of the alternative positioning strategy is greater than or equal to the current confidence.

Optionally, in some embodiments of the present disclosure, the device 10 of the present embodiment further includes: a controlling module. The controlling module is configured to, upon calculating the confidence of the alternative positioning strategy based on the Euclidean distance residuals, in a case where the confidence of the alternative positioning strategy is less than the current confidence, continue to perform positioning based on the current positioning strategy, and issuing a low-confidence alert.

Optionally, in one embodiment of the present disclosure, the device 10 of the present embodiment further includes: a determination module. The determination module is configured to, in a case where the confidence of the alternative positioning strategy is less than the current confidence, determining whether the current confidence is less than an untrusted confidence. The processing module is further configured to, in a case where the current confidence is less than the untrusted confidence, issuing a positioning failure alert.

It should be noted that the above explanations regarding the method for unmanned vehicle positioning also apply to the apparatus for unmanned vehicle positioning in the embodiments, which are not repeated herein.

The apparatus for unmanned positioning vehicles according to the embodiments of the present disclosure acquires the GDOP value of the current position of the current positioning strategy to calculate its current confidence. In the case that the current confidence is less than the trusted confidence, the current positioning strategy is replaced with the alternative positioning strategy, such that the current position of the vehicle is determined based on a fusion of the GNSS data, LiDAR data, and inertial measurement data of the vehicle. The method effectively enhances positioning accuracy when the GNSS signal is weak, thereby improving vehicle safety and meeting the driver's and passenger's requirements.

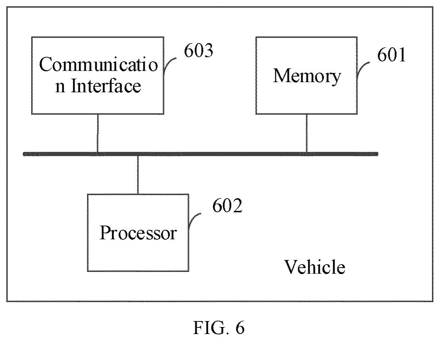

FIG. 6 illustrates a structural diagram of the vehicle according to some embodiments of the present disclosure. The vehicle includes:
a memory 601, a processor 602, and a computer program stored in the memory 601 and one or more executable computer programs of the processor 602 stored in the memory 601.

The processor 602, when loading and executing the one or more programs, is caused to perform the method for unmanned vehicle positioning in the above embodiments.

Furthermore, the vehicle further includes:

a communication interface 603, configured to communicate between memory 601 and processor 602; and
a memory 601, configured to store the computer program executable on processor 602.

The memory 601 includes high-speed RAM memory. and also includes non-transitory memory, such as at least one disk storage device.

In the case that the memory 601, the processor 602, and the communication interface 603 are implemented independently, the communication interface 603, the memory 601, and the processor 602 are interconnected via a bus to facilitate communication among them. The bus is an industry standard architecture (ISA) bus, a peripheral component interconnect (PCI) bus, or an extended industry standard architecture (EISA) bus, or the like. The bus is divided into an address bus, a data bus, a control bus, or the like. For simplicity, FIG. 6 illustrates only a single thick line, which does not imply the presence of only one bus or a single bus type.

Optionally, in specific implementations, in the case that the memory 601, the processor 602, and the communication interface 603 are integrated onto a single chip, they can communicate with each other via the internal interfaces.

The processor 602 is a central processing unit (CPU), an application-specific integrated circuit (ASIC), or one or more integrated circuits configured to implement the embodiments of the present disclosure.

The embodiments further provide a computer-readable storage medium storing a computer program. A processor, when loading and executing the one or more computer programs, is caused to perform the method for unmanned vehicle positioning as described above.

The embodiments of the present disclosure further provide a computer program product. The computer program product, when loaded and executed in a vehicle, causes the vehicle to perform the method for unmanned vehicle positioning as described above.

**In** the present specification, reference to the terms "an embodiment," "some embodiments," "examples,", "a specific example," or "some examples," means that the specific features, structures, materials, or characteristics described in conjunction with the embodiment or example are included in at least one embodiment or example of the present disclosure. In the specification, schematic expressions of the above terms are not necessarily directed to the same embodiment or example. Moreover, the specific features, structures, materials, or characteristics described may be combined in one or more embodiments or examples. Additionally, those skilled in the art can combine and integrate the different embodiments or examples and features of different embodiments or examples described in the specification without contradiction.

Furthermore, the terms "first" and "second" are used for descriptive purposes only and should not be construed as indicating or implying relative importance or implicitly specifying the number of indicated technical features. Thus, a feature defined with "first" or "second" may explicitly or implicitly include at least one such feature. In the description of the present application, "N" means at least two, such as two, three, etc., unless explicitly and specifically defined otherwise.

Any process or method description depicted in the flowchart or otherwise described herein may be understood to represent modules, segments, or portions of code including one or more executable instructions for implementing the steps of a specific logic function or process. The scope of the preferred embodiments of the present disclosure includes additional implementations where functions may be executed out of the order shown or discussed, including substantially concurrently or in reverse order based on the functions involved, as would be understood by those skilled in the technical field.

Logic and/or steps represented in flowcharts or described otherwise herein, such as sequences of executable instructions for implementing logical functions, may be embodied in any computer-readable medium for use by or in connection with an instruction execution system, apparatus, or device (e.g., a computer-based system, a system including a processor, or another system that can fetch and execute instructions from an instruction execution system, apparatus, or device). As used in this specification, a "computer-readable medium" may be any device that can contain, store, communicate, propagate, or transport a program for use by or in connection with an instruction execution system, apparatus, or device. More specific examples of computer-readable media (non-exhaustive list) include the following: an electrical connection with one or more wires (electronic device), a portable computer diskette (magnetic device), random access memory (RAM), read-only memory (ROM), erasable programmable read-only memory (EPROM or flash memory), an optical fiber device, and a portable compact disc read-only memory (CD-ROM). Additionally, a computer-readable medium can even print the program on paper or another suitable medium, as the program can be electronically obtained via optical scanning of the paper or other medium, followed by editing, interpretation, or other suitable processing if necessary, and then stored in a computer memory.

It should be understood that various parts of the present application may be implemented by hardware, software, firmware, or a combination thereof. In the above-described embodiments, the steps or methods may be implemented by software or firmware stored in a memory and executed by a suitable instruction execution system. If implemented in hardware, as in another embodiment, they may be implemented by any one or a combination of the following techniques well-known in the art: discrete logic circuits with logic gate circuits for implementing logical functions on data signals, an application-specific integrated circuit (ASIC) with suitable combinational logic gate circuits, a programmable gate array (PGA), a field-programmable gate array (FPGA), etc.

Those of ordinary skill in the technical field may understand that all or part of the steps in the methods of the above embodiments may be implemented by a program that instructs the associated hardware to complete, where the program may be stored in a computer-readable storage medium. When the program is executed, one or a combination of the steps of the method embodiments are performed.

Furthermore, the various functional units in the various embodiments of the present disclosure may be integrated in one processing module, or the individual units may physically exist separately, or two or more units may be integrated in a single module. The integrated modules may be implemented either in the form of hardware or in the form of software functional modules. The integrated module may also be stored in a computer-readable storage medium if it is realized in the form of a software function module and sold or used as a separate product.

The storage medium referred to above may be a read-only memory, a disk or a CD-ROM, and the like. Although embodiments of the present disclosure have been shown and described above, it is to be understood that the above embodiments are exemplary and are not to be construed as a limitation of the present disclosure, and that a person of ordinary skill in the art may make changes, modifications, substitutions, and variations of the above embodiments within the scope of the present disclosure.

**Claims**

1. A method for unmanned vehicle positioning, comprising:

   acquiring a geometric dilution of precision (GDOP) value of a current positioning strategy of a vehicle, wherein the GDOP value indicates a positioning accuracy of global navigation satellite system (GNSS) data of the vehicle, and the current positioning strategy is a GNSS positioning strategy;
   calculating a current confidence of the current positioning strategy based on the GDOP value; and
   in a case where the current confidence is less than a trusted confidence, determining that the current positioning strategy fails, replacing the current positioning strategy with an alternative positioning strategy, and determining a current position of the vehicle based on the alternative positioning strategy, wherein the alternative positioning strategy is a positioning strategy that determines the current position of the vehicle based on a fusion of the GNSS data, LiDAR data, and inertial measurement data of the vehicle.

2. The method according to claim 1, wherein determining the current position of the vehicle based on the fusion of the GNSS data, the LiDAR data, and the inertial measurement data of the vehicle comprises:

   determining initial pose information of the vehicle in a map coordinate system based on the GNSS data and the inertial measurement data;
   generating a point cloud scene map based on the initial pose information and the LiDAR data; and
   determining the current position of the vehicle based on a matching result between point cloud data in the LiDAR data and the point cloud scene map.

3. The method according to claim 2, wherein determining the initial pose information of the vehicle in the map coordinate system based on the GNSS data and the inertial measurement data comprises:

   determining global positioning information in the reference coordinate system based on the GNSS data and the inertial measurement data via extended Kalman filtering; and
   determining the initial pose information of the vehicle in the map coordinate system based on a conversion relationship between the reference coordinate system and the map coordinate system, and the global positioning information.

4. The method according to claim 2, wherein generating the point cloud scene map based on the initial pose information and the LiDAR data comprises:

   constructing a point cloud map based on at least one keyframe in the LiDAR data corresponding to the initial pose information;

extracting keyframe data from the LiDAR data; acquiring keyframe pose information by extracting at least one point-plane feature from the keyframe data and performing pose matching on each of the point-plane feature; and generating the point cloud scene map by inserting the point cloud data in the LiDAR data into the point cloud map based on the keyframe pose information.

5. The method according to claim 2, wherein prior to replacing the current positioning strategy with the alternative positioning strategy, the method further comprises:

acquiring Euclidean distance residuals between points in the point cloud data and corresponding points in the point cloud scene map; calculating a confidence of the alternative positioning strategy based on the Euclidean distance residuals; and in a case where the confidence of the alternative positioning strategy is greater than or equal to the current confidence, replacing the current positioning strategy with the alternative positioning strategy.

6. The method according to claim 5, wherein upon calculating the confidence of the alternative positioning strategy based on the Euclidean distance residuals, the method further comprises: in a case where the confidence of the alternative positioning strategy is less than the current confidence, continuing to perform positioning based on the current positioning strategy, and issuing a low-confidence alert.

7. The method according to claim 5, wherein upon calculating the confidence of the alternative positioning strategy based on the Euclidean distance residuals, the method further comprises:

in a case where the confidence of the alternative positioning strategy is less than the current confidence, determining whether the current confidence is less than an untrusted confidence; and in a case where the current confidence is less than the untrusted confidence, issuing a positioning failure alert.

8. An apparatus for unmanned vehicle positioning, comprising:

an acquiring module, configured to acquire a geometric dilution of precision (GDOP) value of a current positioning strategy of a vehicle, wherein the GDOP value indicates a positioning accuracy of global navigation satellite system (GNSS) data of the vehicle, and the current positioning strategy is a GNSS positioning strategy; a calculating module, configured to calculate a current confidence of the current positioning strategy based on the GDOP value; and a processing module, configured to determine that the current positioning strategy fails, replace the current positioning strategy with an alternative positioning strategy, and determine a current position of the vehicle based on the alternative positioning strategy, in a case where the current confidence is less than a trusted confidence, wherein the alternative positioning strategy is a positioning strategy that determines the current position of the vehicle based on a fusion of the GNSS data, LiDAR data, and inertial measurement data of the vehicle.

9. A vehicle, comprising: a memory, a processor, and one or more executable computer programs of the processor stored in the memory, wherein the processor, when loading and executing the one or more executable computer programs, is caused to perform the method for unmanned vehicle positioning as defined in any one of claims 1 to 7.

10. A computer-readable storage medium, storing one or more computer programs, wherein a processor, when loading and executing the one or more computer programs, is caused to perform the method for unmanned vehicle positioning as defined in any one of claims 1 to 7.

Acquiring a GDOP value of a current positioning strategy of a vehicle, wherein the GDOP value indicates a positioning accuracy of GNSS data of the vehicle, and the current positioning strategy is a GNSS positioning strategy ⟩ S101

Calculating a current confidence of the current positioning strategy based on the GDOP value ⟩ S102

In a case where the current confidence is less than a trusted confidence, determining that the current positioning strategy fails, replacing the current positioning strategy with an alternative positioning strategy, and determining a current position of the vehicle based on the alternative positioning strategy, wherein the alternative positioning strategy is a positioning strategy that determines the current position of the vehicle based on a fusion of the GNSS data, LiDAR data, and inertial measurement data of the vehicle ⟩ S103

FIG. 1

FIG. 2

FIG. 3

Start

LiDAR + IMU + GNSS
Positioning

GNSS Positioning

LiDAR + IMU + GNSS
Positioning Confidence
C1

GNSS Positioning
Confidence C2

No

Yes

C1 <= C2

End

FIG. 4

Acquiring
module
100

Calculating
module
200

Processing
module
300

10

Apparatus For Unmanned Vehicle Positioning

FIG. 5

FIG. 6

## INTERNATIONAL SEARCH REPORT

| International application No. |
|---|
| **PCT/CN2024/098780** |

| **A. CLASSIFICATION OF SUBJECT MATTER** |
|---|
| G01C21/16(2006.01)i; G01C21/34(2006.01)i; G01S17/86(2020.01)i; G01S19/45(2010.01)i |
| According to International Patent Classification (IPC) or to both national classification and IPC |

| **B. FIELDS SEARCHED** |
|---|
| Minimum documentation searched (classification system followed by classification symbols) |
| IPC: G01C21, G01S17, G01S19 |
| Documentation searched other than minimum documentation to the extent that such documents are included in the fields searched |
| |
| Electronic data base consulted during the international search (name of data base and, where practicable, search terms used) |
| CNTXT, ENTXTC, ENTXT, VEN, CJFD, CNKI: 卫星, 激光雷达, 点云, 惯导, 融合, 组合, 定位, 切换, 替换, 置信度, 可信度, 可靠度, 几何精度因子, satellite, GNSS, LIDAR, point cloud, inertial navigation, IMU, INS, fusion, positioning, switch, confidence, GDOP, geometry dilution of precision |

| **C. DOCUMENTS CONSIDERED TO BE RELEVANT** |
|---|

| Category* | Citation of document, with indication, where appropriate, of the relevant passages | Relevant to claim No. |
|---|---|---|
| PX | CN 116734880 A (WUHU LION AUTOMOTIVE TECHNOLOGY CO., LTD. et al.) 12 September 2023 (2023-09-12) claims 1-10 | 1-10 |
| Y | CN 113654555 A (SHANGHAI MAXIEYE AUTOMOBILE TECHNOLOGY CO., LTD.) 16 November 2021 (2021-11-16) description, paragraphs 12 and 21-52, and figures 1-4 | 1-10 |
| Y | CN 114564034 A (FUYUN INTELLIGENT CONTROL (XIAMEN) INTELLIGENT TECHNOLOGY CO., LTD.) 31 May 2022 (2022-05-31) description, paragraph 40 | 1-10 |
| Y | CN 106908822 A (BEIJING JINGDONG SHANGKE INFORMATION TECHNOLOGY CO., LTD. et al.) 30 June 2017 (2017-06-30) description, paragraphs 82-85 | 1-10 |
| Y | CN 114608568 A (BEIJING INSTITUTE OF TECHNOLOGY) 10 June 2022 (2022-06-10) description, paragraphs 19-28 | 5-7 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 August 2024** | **31 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/098780** |

**C.    DOCUMENTS CONSIDERED TO BE RELEVANT**

| Category* | Citation of document, with indication, where appropriate, of the relevant passages | Relevant to claim No. |
|---|---|---|
| Y | CN 115406439 A (CHINA FAW CO., LTD.) 29 November 2022 (2022-11-29) description, paragraphs 56-58 | 5-7 |
| A | CN 115930948 A (NANJING UNIVERSITY OF SCIENCE AND TECHNOLOGY) 07 April 2023 (2023-04-07) entire document | 1-10 |
| A | US 2022011448 A1 (BEIJING TUSEN WEILAI TECHNOLOGY CO., LTD.) 13 January 2022 (2022-01-13) entire document | 1-10 |
| A | WO 2023023936 A1 (HUAWEI TECHNOLOGIES CO., LTD.) 02 March 2023 (2023-03-02) entire document | 1-10 |
| A | 许智理等 (XU, Zhili et al.). "面向智能驾驶的高精度多源融合定位综述 (Review of High-Precision Multi-sensor Integrated Positioning Towards Intelligent Driving)" 导航定位与授时 (Navigation Positioning and Timing), Vol. 10, No. 3, 31 May 2023 (2023-05-31), 1-20 ISSN: 2095-8110, entire document | 1-10 |

Form PCT/ISA/210 (second sheet) (July 2022)

**INTERNATIONAL SEARCH REPORT**
Information on patent family members

International application No.

**PCT/CN2024/098780**

| Patent document cited in search report | | | Publication date (day/month/year) | Patent family member(s) | | | Publication date (day/month/year) |
|---|---|---|---|---|---|---|---|
| CN | 116734880 | A | 12 September 2023 | None | | | |
| CN | 113654555 | A | 16 November 2021 | None | | | |
| CN | 114564034 | A | 31 May 2022 | None | | | |
| CN | 106908822 | A | 30 June 2017 | CN | 106908822 | B | 30 June 2020 |
| | | | | HK | 1237879 | A0 | 20 April 2018 |
| | | | | HK | 1237879 | A1 | 09 April 2021 |
| CN | 114608568 | A | 10 June 2022 | CN | 114608568 | B | 03 May 2024 |
| CN | 115406439 | A | 29 November 2022 | None | | | |
| CN | 115930948 | A | 07 April 2023 | None | | | |
| US | 2022011448 | A1 | 13 January 2022 | JP | 2022013929 | A | 18 January 2022 |
| | | | | AU | 2021204643 | A1 | 20 January 2022 |
| | | | | EP | 3943983 | A1 | 26 January 2022 |
| | | | | CN | 111812698 | A | 23 October 2020 |
| WO | 2023023936 | A1 | 02 March 2023 | EP | 4382864 | A1 | 12 June 2024 |
| | | | | CN | 113853508 | A | 28 December 2021 |

Form PCT/ISA/210 (patent family annex) (July 2022)

REFERENCES CITED IN THE DESCRIPTION

**Patent documents cited in the description**

- CN 202310699223